Europäisches Patentamt

**European Patent Office**

Office européen des brevets

(11) Veröffentlichungsnummer: **0 048 003**
**B1**

(12) **EUROPÄISCHE PATENTSCHRIFT**

(45) Veröffentlichungstag der Patentschrift:
**27.12.84**

(21) Anmeldenummer: **81107202.4**

(22) Anmeldetag: **12.09.81**

(51) Int. Cl.³: **F 16 L 13/14, F 16 L 21/08**

(54) **Nichtlösbare Rohrverbindung.**

(30) Priorität: **15.09.80 US 187438**

(43) Veröffentlichungstag der Anmeldung:
**24.03.82 Patentblatt 82/12**

(45) Bekanntmachung des Hinweises auf die Patenterteilung:
**27.12.84 Patentblatt 84/52**

(84) Benannte Vertragsstaaten:
**AT CH DE LI NL SE**

(56) Entgegenhaltungen:
**DE - A - 2 332 241**
**DE - A - 2 700 516**
**DE - A - 2 729 393**
**DE - A - 2 927 716**

(73) Patentinhaber: **Hackforth GmbH & Co. KG,**
**Heerstrasse 66, D-4690 Herne 2 (DE)**

(72) Erfinder: **Puri, Vijay, 22136 Bailinger Street Chatsworth,**
**Los Angeles California 91311 (US)**

(74) Vertreter: **Radt, Finkener, Ernesti Patentanwälte,**
**Heinrich-König-Strasse 119, D-4630 Bochum 1 (DE)**

## Beschreibung

Die Erfindung betrifft eine nichtlösbare Rohrverbindung zum Anschluss von Rohrleitungen mit aussen glatten Enden, bestehend aus einer Hülse mit einem Mittelteil und mindestens einem Muffenende zum Einführen des glatten Endes der anzuschliessenden Rohrleitung und mit einer äusseren, umlaufenden Erhebung in der Nähe des freien Endes der Hülse und einem aussen auf das Muffenende aufschiebbaren Klemmring mit einer zylindrischen Innenfläche von geringerem Innendurchmesser als dem Aussendurchmesser der Erhebung, sodass bei aufgeschobenem Klemmring zur bleibenden Verformung der Hülse und gleichzeitigen Verformung der Wandung der eingesteckten Rohrleitung die Erhebung von der zylindrischen Innenfläche radial einwärts gedrückt wird.

Eine Rohrverbindung der vorstehend beschriebenen Art ist aus der DE-A 2 700 516 bekannt. Bei dieser Rohrverbindung enthält der Klemmring am Eingangsende einen kurzen zylindrischen Abschnitt, anschliessend einen einwärts gerichteten kegelstumpfförmigen Abschnitt, danach wieder einen zylindrischen Abschnitt und einen abschliessenden ebenfalls einwärts gerichteten kegelstumpfförmigen Abschnitt, der an einer kurzen Schulter endet. Die Hülse ist dagegen so ausgebildet, dass im Anschluss an die umlaufende Erhebung nach einem eingeschnürten zylindrischen Abschnitt ein im Durchmesser ansteigender Abschnitt folgt. Infolge dieser Ausgestaltung ist während der gesamten axialen Aufschiebebewegung des Klemmrings eine ständig steigende Verformungsarbeit zu leisten und damit auch eine ständig steigende Montagekraft aufzubringen. Hierbei entsteht im wesentlichen eine trichterförmige Verformung von Hülse und Wandung des eingesteckten Rohrendes, wobei der grössere Querschnitt des Trichters vom Mittelteil der Rohrverbindung abgewandt ist. Die Haltekraft einer solchen Verbindung ist begrenzt. Nachteilig ist auch die zweifach konische Ausbildung der Innenwandung des Klemmrings.

Der Erfindung liegt die Aufgabe zugrunde, eine nicht lösbare Rohrverbindung dahingehend weiter zu entwickeln, dass bei einem insgesamt geringerem Gewicht der Verbindungsteile eine bessere Funktion, d.h. eine grössere Haftkraft in axialer und in Umfangsrichtung erzielt wird und die darüber hinaus billiger herstellbar ist.

Ausgehend von einer nichtlösbaren Rohrverbindung der eingangs genannten Art wird diese Aufgabe erfindungsgemäss dadurch gelöst, dass sich an die umlaufende Erhebung zum Mittelteil hin entweder ein im Aussendurchmesser abnehmender Konusabschnitt mit flacher Neigung gegenüber der Längsachse der Rohrverbindung oder ein in mehreren flachen Stufen abnehmender Abschnitt anschliesst und dass die mit der Erhebung zusammenwirkende zylindrische Innenfläche des Klemmrings auch mit dem abnehmenden Abschnitt zusammenwirkt.

Der Neigungswinkel des Konusabschnittes beträgt vorzugsweise nur 3°.

Die nach der Erfindung vorgesehene Formgebung der Hülse, d.h. die gegenläufige Verjüngung im Anschluss an die umlaufende Erhebung führt in Verbindung mit der zylindrischen Innenfläche des Klemmringes zu einer wesentlichen Verringerung der Montagekraft, weil die Verformungsarbeit im wesentlichen nur von der Erhebung abhängt und während des Aufschiebens des Klemmrings nicht mehr zunimmt, wie dies bei der bekannten Rohrverbindung der Fall ist. Andererseits bewirkt die gegenläufige Verjüngung eine trichterförmige Verklemmung von Hülse und Wandung des Rohrendes derart, dass der grössere Durchmesser des so gebildeten Trichters dem Mittelteil der Rohrverbindung zugewandt ist. Vergleichsweise ergibt sich eine Verringerung der Montagekräfte um mehr als 50% gegenüber einer Rohrverbindung der eingangs beschriebenen Art, wobei für die Herausziehfestigkeit ein nahezu doppelt so grosser Wert erreicht wird. Mit anderen Worten: Zur Erzielung einer bestimmten Herausziehfestigkeit kann die Rohrverbindung nach der Erfindung etwa halb so gross und schwer sein im Vergleich zu einer Rohrverbindung der bekannten Art. Diese Einsparungen an Grösse und Gewicht sind äusserst wünschenswert, nicht nur in bezug auf eine Reduzierung der Gesamtkosten, sondern auch im Hinblick auf die Reduzierung des Gesamtgewichtes, beispielsweise in Flugzeugen oder anderen Fahrzeugen, in denen eine grössere Anzahl solcher Rohrverbindungen verwendet wird.

Zweckmässige Weiterbildungen der erfindungsgemässen Rohrverbindung ergeben sich aus den Unteransprüchen.

Die bei der Erfindung entstehende Art der Verformung verursacht zusätzlich eine leichte Streckung des in der Hülse befindlichen Abschnittes der Rohrleitung, wodurch eine vorgespannte Rohrverbindung geschaffen wird, in der das Ende der Rohrleitung entweder gegen einen im Mittelteil nach innen vorstehenden Halteflansch oder gegebenenfalls gegen einen angrenzenden Rohrabschnitt gedrückt wird.

Ausführungsbeispiele der Erfindung sind in der Zeichnung dargestellt und werden nachfolgend näher erläutert. Es zeigen:

Fig. 1 einen Teillängsschnitt des Endes einer Rohrleitung und einer Hülse mit einem flachen Konusabschnitt,

Fig. 2 einen Teillängsschnitt der Rohrverbindung nach Fig. 1, nachdem der Klemmring eine Verformung von Hülse und Rohrende verursacht hat,

Fig. 3 einen Teillängsschnitt einer anderen Ausführungsform einer Hülse,

Fig. 4 eine Seitenansicht einer Rohrverbindung, bei der die Hülse spiegelbildlich übereinstimmende Muffenenden aufweist,

Fig. 5 einen Teillängsschnitt des Mittelabschnittes einer Hülse mit Aussen- und Innenflansch,

Fig. 6 einen Teillängsschnitt einer Hülse in einer anderen Ausführungsform in bezug auf den Innenflansch und

Fig. 7 einen Teillängsschnitt eines Klemmrings in einer anderen Ausführungsform.

Die Erfindung wird vorzugsweise anhand einer Hülse mit zwei übereinstimmenden Muffenenden erläutert. Eine solche Hülse ist in bezug auf die Mittellinie A–A weitgehend symmetrisch. Die Beschreibung kann deshalb auf ein Ende der Hülse abgestellt werden, wobei auf das andere Ende nur dann Bezug genommen wird, wenn es notwendig ist, diesbezügliche Besonderheiten der Erfindung zu beschreiben. Es braucht nicht betont zu werden, dass die Erfindung ebensogut dazu benutzt werden kann, eine Vielzahl von Rohrverbindungen und -anschlüssen herzustellen. Das zweite Ende der Hülse kann auch aus einem Stecker, einem Reduzierstück, einem Krümmer, einem T-Stück usw. bestehen.

In der Zeichnung sind die Hülse mit 10, der Klemmring mit 12 und der Mittelteil der Hülse mit 14 bezeichnet. Die Hülse 10 kann aus irgendeinem kaltverformbaren Metall wie Aluminium, Stahl, Kupfer usw. bestehen, wobei der Klemmring 12 aus einem Metall von bedeutend höherer Festigkeit hergestellt wird. Die Hülse 10 hat einen inneren Hohlraum, in den das glatte Ende einer anzuschliessenden Rohrleitung einschiebbar ist. An der inneren Mantelfläche kann die Hülse 10 sägezahnartige Nuten 20, 21, 22 u. 23 aufweisen.

Diese Nuten sind hinsichtlich Grösse und Form so zu bemessen, dass der Rohrabschnitt 16, wenn der Klemmring 12 auf die Hülse 10 aufgeschoben wird, durch die «Zähne» der Sägezahnnuten verformt wird, wobei der Rohrdurchmesser innerhalb der Nuten unbeeinflusst bleibt, um eine Klemmwirkung der Hülse 10 auf die Wandung des Rohrabschnittes 16 zu bewirken.

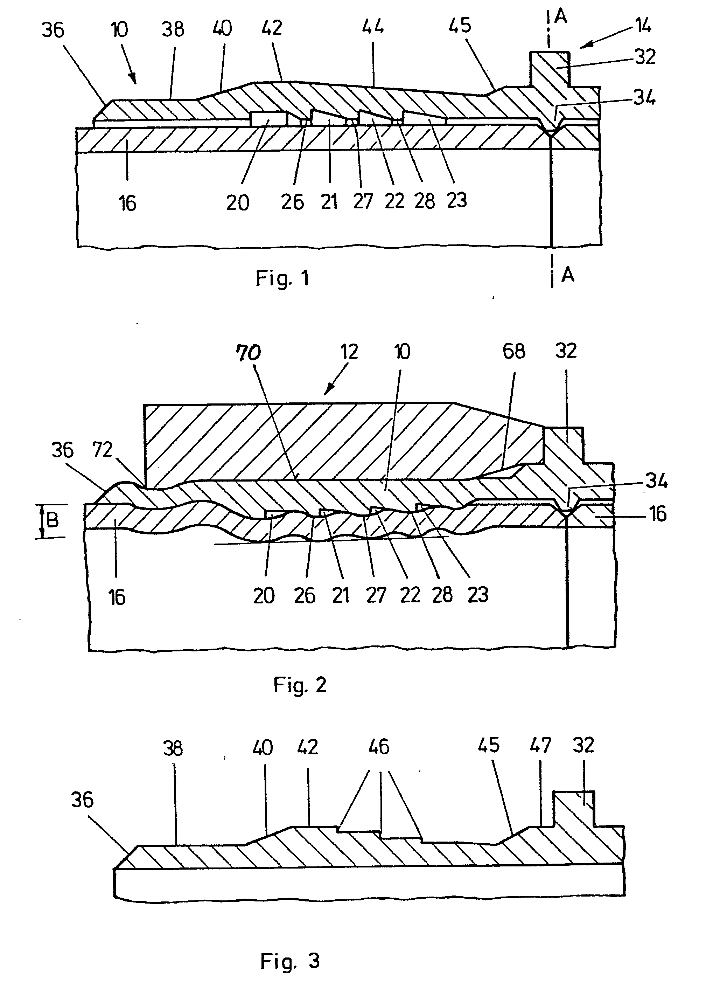

Bei der in Fig. 1 dargestellten bevorzugten Ausführungsform enthält die Hülse 10 vier Nuten. Die Eingangsnut 20 hat einen im wesentlichen gleichbleibenden Durchmesser, damit eine genügend grosse Oberfläche für eine leichte Überprüfung durch Mikrometermessungen vorhanden ist. Dieser Durchmesser entspricht den Durchmessern der Nuten 21, 22 und 23 an ihren grössten Stellen. Insofern ist durch die Überprüfung der Eingangsnut 20 auch die korrekte Tiefe der Nuten 21, 22 und 23 sichergestellt. Zwischen den Nuten befinden sich flache Stege 26, 27 und 28, die die Wandung des Rohrabschnittes 16 berühren und verformen, wenn der Klemmring 12 auf die Hülse 10 geschoben wird.

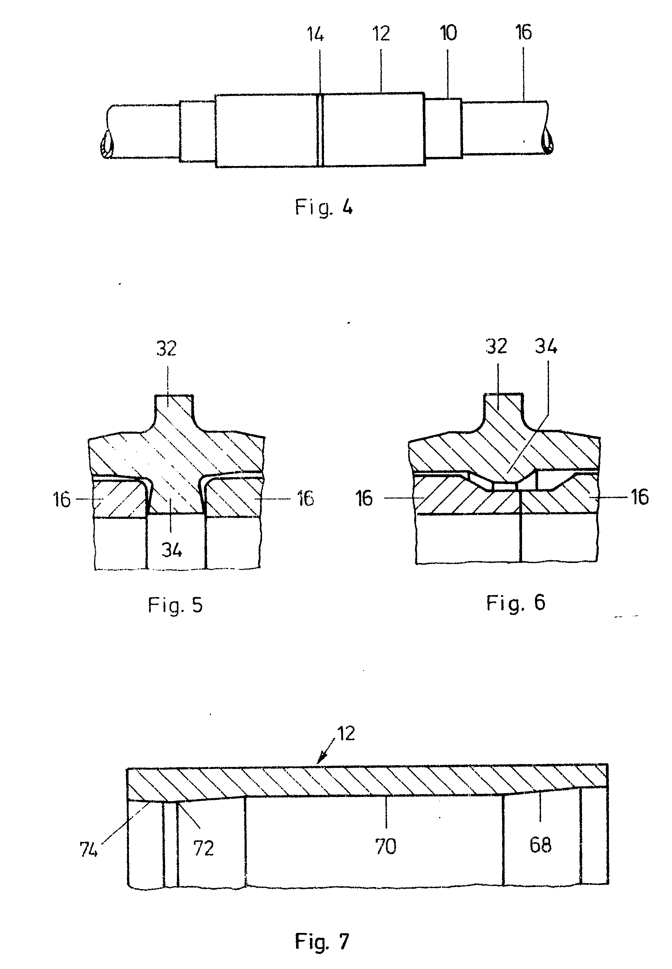

Im Mittelabschnitt 14 der Hülse 10 befindet sich ein nach aussen ragender Anschlagflansch 32, der die Bewegung des Klemmrings 12 auf der Hülse 10 begrenzt, und ein sich nach innen erstreckender Halteflansch 34, der das Einschieben des Rohrabschnittes 16 in die Hülse 10 begrenzt, um die einzelnen Rohrabschnitte korrekt innerhalb der Hülse 10 zu zentrieren und so eine maximale Festigkeit der Verbindung zu erreichen. In der Zeichnung sind zwei Ausführungsformen des Halteflansches 34 dargestellt. Bei der ersten Ausführungsform dehnt sich der Halteflansch radial nach innen um ein Mass aus, das ungefähr der Stärke der Wandung des Rohrabschnittes 16 entspricht. Diese Ausführung ist in Fig. 5 dargestellt. Hier stossen die Enden der Rohrabschnitte 16 direkt gegen den Halteflansch 34 und haben keinen direkten Kontakt miteinander.

Bei der anderen Ausführungsform, die in Fig. 6 dargestellt ist, dehnt sich der Halteflansch 34 um ein geringeres Mass radial nach innen aus. Bei Verwendung eines solchen Halteflansches 34 können die Enden der Rohrabschnitte 16 so abgeschrägt geformt sein, dass es möglich ist, dass ein wesentlicher Teil der Enden der Rohrabschnitte 16 miteinander in Berührung kommt. Es ist zu erwähnen, dass der Halteflansch 34 völlig weggelassen werden kann, so dass die Möglichkeit besteht, die Vorrichtung nach der Erfindung für die Reparatur von undichten Stellen in einem Rohrabschnitt zu verwenden.

Der äussere Mantel der Hülse 10 weist eine leichte «umgekehrte Konizität» auf, die von der Oberfläche 42 der Hülse 10 zum Mittelabschnitt 14 verläuft. Bei der in Fig. 1 dargestellten bevorzugten Ausführungsform wird diese «umgekehrte Konizität» durch eine Formgebung erreicht, bei der der äussere Durchmesser der Hülse 10 auf einer Strecke vom äusseren Ende 36 in Richtung auf den Mittelabschnitt 14 gleichbleibend ist, um eine ebene Oberfläche 38 zu schaffen. Danach wächst der äussere Durchmesser der Hülse 10 stark an, so dass eine abgeschrägte Oberfläche 40 vorhanden ist. Bei der bevorzugten Ausführung beträgt die Neigung dieser Oberfläche 20°. Nach Erreichen seines Maximums ist der äussere Durchmesser wieder gleichbleibend, so dass eine zweite ebene Oberfläche 42 vorhanden ist. Danach nimmt der äussere Durchmesser der Hülse 10 leicht ab, vorzugsweise mit einer Neigung von 3°, so dass eine zweite abgeschrägte Oberfläche 44 vorhanden ist. Die ebene Oberfläche 42 und die abgeschrägte Oberfläche 44 ergeben den Effekt der «umgekehrten Konizität», der einzigartig für diese Erfindung ist. Die von der abgeschrägten Oberfläche 44 zum Anschlagflansch 32 führende abgeschrägte Oberfläche 45 dient zur Unterstützung der Bewegung des Klemmrings 12 in seine Stellung bis zum Anschlagflansch 32. Direkt angrenzend an den Anschlagflansch 32 befindet sich eine Plateaufläche 47, auf der die Frontseite des Klemmrings 12 schliesslich ruht, nachdem der Klemmring 12 in seine endgültige Stellung auf der Hülse 10 aufgeschoben worden ist.

Bei der in Fig. 3 dargestellten abgewandelten Ausführung ist die abgeschrägte Oberfläche 44 mit Stufen 46 versehen, die dazu beitragen, den Klemmring 12 in seiner endgültigen Stellung zu halten.

Betrachtet man nun den Klemmring 12, so ist erkennbar, dass dieser Klemmring im Längsschnitt im wesentlichen einen Kegelstumpf darstellt. Die abgeschrägte Kante 68 an der Frontseite erleichtert das Aufschieben des Klemmringes 12, wenn er auf die abgeschrägte Oberfläche 40 und die Plateaufläche 47 auftrifft. Hinter der abgeschrägten Kante 68 befindet sich eine ebene Fläche 70, die so ausgebildet ist, dass sie im wesentlichen auf der gesamten Aussenfläche der Oberfläche 40, 42 und 44 liegt, wenn der Klemmring 12 in seine endgültige Stellung gegen den Anschlagflansch 32 geschoben wird. Am rückwärtigen Ende hat der Klemmring 12 einen steilen Absatz 72, der den Klemmring 12 in der Beibehaltung seiner Klemmstellung unterstützt. Wie die Darstellung in Fig. 7 zeigt, hat der Klemmring 12 am rückwärtigen Ende an der Innenseite eine sich erweiternde Auslauffläche 74, um einen möglichen Spannungspunkt am steilen Absatz 72 auszuschliessen.

Hergestellt wird eine Rohrverbindung durch das Einschieben des Rohrabschnittes 16 in die Hülse 10. Anfänglich gleitet der Rohrabschnitt leicht innerhalb der Hülse 10, jedoch ist die Grösse der Hülse 10 so gewählt, dass ein freier Zwischenraum zwischen dem Rohrabschnitt 16 und der inneren Oberfläche der Hülse 10 vermieden wird, ohne jedoch das freie Gleiten des Rohrabschnittes 16 innerhalb der Hülse 10 zu beeinträchtigen. Der Halteflansch 34 beendet die Bewegung des Rohrabschnittes 16 innerhalb der Hülse 10 und bewirkt, dass der Rohrabschnitt 16 innerhalb der Hülse 10 eine zentrische Lage einnimmt. Danach wird der Klemmring 12 über die Hülse 10 geschoben, wodurch eine Verformung der Hülse 10 und zugleich eine entsprechende Verformung der Wandung des Rohrabschnittes 16 verursacht wird. Aufgrund der Gestaltung der Hülse 10 werden die Hülse und der Rohrabschnitt 16 am stärksten im Bereich der Oberfläche 42 verformt. Eine geringere Verformung entsteht dagegen in der Nähe des zentralen Abschnitts 14. Dies führt zu einer umgekehrten Konusform in der Verformung der Hülse 10 und des Rohrabschnittes 16. Wenn der Rohrabschnitt 16 verformt wird, wird die Wandung in die mit Sägezähnen versehenen Nuten 20, 21, 22 und 23 der Hülse eingedrückt. Die Sägezahnnuten übernehmen dabei eine klemmende Funktion mit der Tendenz, den Rohrabschnitt 16 innerhalb der Hülse 10 zu halten.

Durch die in dieser Art bewirkte Verformung des Rohrabschnittes 16 erfährt der Rohrabschnitt 16 einen «Zahnpastatuben»-Effekt, wodurch sich der Rohrabschnitt 16 geringfügig, aber doch erkennbar ausdehnt. Da sich der gegenüberliegende Rohrabschnitt 16 ebenfalls ausdehnt, werden die angrenzenden Rohrabschnitte 16 mit einem erheblichen Druck in einen engen Kontakt zum Halteflansch 34 oder gegeneinander gedrückt, was von der jeweiligen Ausführung des Halteflansches 34 abhängt. Bei jeder Ausführungsart erhält man eine spaltfreie Verbindung, die Reinigungs- und Korrosionsprobleme im wesentlichen ausschliesst.

Eine Verbindungslinie der inneren Kanten der Sägezahnnuten der verformten Hülse 10 und eine Linie, die die gleichen Nuten vor der Verformung verbindet, bilden einen Winkel von etwa 3°, wie es in Fig. 2 durch B dargestellt ist. Wie ohne weiteres ersichtlich ist, wäre für das Herausziehen des Rohrabschnittes 16 aus der Hülse 10, nachdem der Klemmring 12 einmal in seine endgültige Stellung gebracht worden ist und Hülse 10 und Rohrabschnitt 16 zwischen der Oberfläche 40 und dem Halteflansch 34 verformt worden sind, eine erneute Verformung dieser Teile erforderlich. Die «umgekehrte Konizität» von 3° erhöht die Herausziehfestigkeit der auf diese Weise erzielten Rohrverbindung ganz erheblich.

Vorstehend wurde eine verbesserte Vorrichtung zur Herstellung einer Rohrverbindung beschrieben und offenbart. Es ist jedoch ohne weiteres verständlich, dass verschiedene Modifikationen der hier beschriebenen Ausführungen möglich sind.

**Patentansprüche**

1. Nichtlösbare Rohrverbindung zum Anschluss von Rohrleitungen (16) mit aussen glatten Enden, bestehend aus einer Hülse (10) mit einem Mittelteil (14) und mindestens einem Muffenende zum Einführen des glatten Endes der anzuschliessenden Rohrleitung (16) und mit einer äusseren, umlaufenden Erhebung (42) in der Nähe des freien Endes (36) der Hülse (10) und einem aussen auf das Muffenende aufschiebbaren Klemmring (12) mit einer zylindrischen Innenfläche (70) von geringerem Innendurchmesser als dem Aussendurchmesser der Erhebung (42), sodass bei aufgeschobenem Klemmring (12) zur bleibenden Verformung der Hülse (10) und gleichzeitigen Verformung der Wandung der eingesteckten Rohrleitung (16) die Erhebung (42) von der zylindrischen Innenfläche (70) radial einwärts gedrückt wird, dadurch gekennzeichnet, dass sich an die umlaufende Erhebung (42) zum Mittelteil (14) hin entweder ein im Aussendurchmesser abnehmender Konusabschnitt (44) mit flacher Neigung gegenüber der Längsachse der Rohrverbindung oder ein in mehreren flachen Stufen abnehmender Abschnitt (46) anschliesst und dass die mit der Erhebung (42) zusammenwirkende zylindrische Innenfläche (70) des Klemmrings (12) auch mit dem abnehmenden Abschnitt (44, 46) zusammenwirkt.

2. Rohrverbindung nach Anspruch 1, dadurch gekennzeichnet, dass der Konusabschnitt (44) einen Neigungswinkel von 3° hat.

3. Rohrverbindung nach Anspruch 1 oder 2, dadurch gekennzeichnet, dass der Erhebung (42) eine umlaufende, ansteigende Führungsfläche (40) vorgelagert ist, die in der Nähe des freien Endes (36) der Hülse (10) beginnt.

4. Rohrverbindung nach einem der Ansprüche 1 bis 3, dadurch gekennzeichnet, dass die Hülse (10) im Mittelteil (14) einen radial nach aussen vorstehenden Anschlagflansch (32) für den Klemmring (12) enthält.

5. Rohrverbindung nach einem der Ansprüche 1 bis 4, dadurch gekennzeichnet, dass die Hülse (10) im Mittelteil (14) einen gegenüber der Innenfläche (70) radial nach innen vorstehenden Halteflansch (34) enthält.

6. Rohrverbindung nach Anspruch 5, dadurch gekennzeichnet, dass die radiale Stärke des Halteflansches (34) etwa der Dicke der Wandung der Rohrleitung (16) entspricht.

7. Rohrverbindung nach Anspruch 5, dadurch gekennzeichnet, dass die radiale Stärke des Halteflansches (34) weitaus geringer ist als die halbe Dicke der Wandung der Rohrleitung (16).

8. Rohrverbindung nach einem der Ansprüche 1 bis 7, dadurch gekennzeichnet, dass in der Innenwand der Hülse (10) axial aufeinanderfolgende, umlaufende Nuten (20 bis 23) enthalten sind.

9. Rohrverbindung nach einem der Ansprüche 1 bis 8, dadurch gekennzeichnet, dass die Hülse (10) in bezug auf ihre die Rohrachse senkrecht durchsetzende Mittelebene spiegelbildlich übereinstimmende Muffenenden aufweist.

**Revendications**

1. Raccord de tuyaux non démontable pour relier des conduits tubulaires (16) à extrémités extérieurement lisses, comprenant un manchon (10) muni d'une partie médiane (14) et d'au moins une extrémité d'embouchure pour l'introduction de l'extrémité lisse du conduit tubulaire (16) devant être raccordé, ainsi qu'une protubérance externe circonférentielle (42) à proximité de l'extrémité libre (36) du manchon (10) et une bague de serrage (12) qui peut être enfilée extérieurement sur l'extrémité d'embouchure et comporte une surface cylindrique interne (70) de diamètre interne plus petit que le diamètre externe de la protubérance (42), de sorte que, lorsque ladite bague de serrage (12) est enfilée, la protubérance (42) est pressée radialement vers l'intérieur par la surface cylindrique interne (70) en vue d'une déformation permanente du manchon (10) et avec déformation simultanée de la paroi du conduit tubulaire (16) emboîté, caractérisé par le fait que, en direction de la partie médiane (14), se raccorde à la protubérance circonférentielle (42) soit une zone tronconique (44) de diamètre externe décroissant et à faible inclinaison par rapport à l'axe longitudinal du raccord de tuyaux, soit une zone (46) décroissant de section par plusieurs gradins aplatis; et par le fait que la surface cylindrique interne (70) de la bague de serrage (12), qui coopère avec la protubérance (42), coopère également avec la zone (44, 46) de section décroissante.

2. Raccord de tuyaux selon la revendication 1, caractérisé par le fait que la zone tronconique (44) présente un angle d'inclinaison de 3°.

3. Raccord de tuyaux selon la revendication 1 ou 2, caractérisé par le fait qu'une face périphérique de guidage (40), formant une rampe vers le haut et située avant la protubérance (42), débute à proximité de l'extrémité libre (36) du manchon (10).

4. Raccord de tuyaux selon l'une des revendications 1 à 3, caractérisé par le fait que le manchon (10) renferme, dans la partie médiane (14), une collerette de butée (32) qui fait saillie radialement vers l'extérieur et est destinée à la bague de serrage (12).

5. Raccord de tuyaux selon l'une des revendications 1 à 4, caractérisé par le fait que le manchon (10) renferme, dans la partie médiane (14), un collet de retenue (34) faisant saillie radialement vers l'intérieur par rapport à la surface interne (70).

6. Raccord de tuyaux selon la revendication 5, caractérisé par le fait que l'épaisseur radiale du collet de retenue (34) correspond approximativement à l'épaisseur de la paroi du conduit tubulaire (16).

7. Raccord de tuyaux selon la revendication 5, caractérisé par le fait que l'épaisseur radiale du collet de retenue (34) est considérablement moindre que la moitié de l'épaisseur de la paroi du conduit tubulaire (16).

8. Raccord de tuyaux selon l'une des revendications 1 à 7, caractérisé par le fait que des gorges circonférentielles (20 à 23) se succédant axialement sont élaborées dans la face interne de la paroi du manchon (10).

9. Raccord de tuyaux selon l'une des revendications 1 à 8, caractérisé par le fait que le manchon (10) présente, par rapport à son plan médian coupant perpendiculairement son axe tubulaire, des extrémités d'embouchure se coïncidant spéculairement.

**Claims**

1. A non-releasable pipe connector for use with pipes (16) having externally plain ends, the connector comprising a sleeve (10) having a central portion (14) and at least one socket-like end adapted to receive the plain end of the pipe (16) to be connected, the sleeve (10) having an outer peripheral bulge (42) near its free end (36), a clamping ring (12) being adapted to be engaged on the outside of the socket-like end, the clamping ring (12) having a cylindrical inside surface (70) of smaller internal diameter than the outer diameter of the bulge (42), so that, with the clamping-ring (12) in its engaged position, the cylindrical inner surface (70) presses the bulge (42) radially inwards to produce a permanent deformation of the sleeve (10) and also to deform the wall of the pushedin pipe, characterised in that the bulge (42) merges towards the central portion (14) either into a concial portion (44) which is of decreasing outer diameter and has a reduced inclination to the longitudinal axis of the connector or into a portion (46) decreasing in a number of flat steps, and the clamping ring inside surface (70) co-operates with the decreasing portion (44, 46) as well as with the bulge (42).

2. A connector according to claim 1, characterised in that the concial portion (44) has an angle of inclination of 3°.

3. A connector according to claim 1 or 2, characterised in that the bulge (42) is preceded by a peripheral rising guide surface (40) which starts near the free end (36) of the sleeve (10).

4. A connector according to any of claims 1 to 3, characterised in that the sleeve (10) has in its central part (14) a radially outwardly projecting abutment flange (32) for the clamping ring (12).

5. A connector according to any of claims 1 to 4, characterised in that the sleeve (10) has in its central part (14) a retaining flange (34) which projects radially inwards in relation to the inside surface (70).

6. A connector according to claim 5, characterised in that the radial thickness of the retaining flange (34) corresponds approximately to the thickness of the wall of the pipe (16).

7. A connector according to claim 5, characterised in that the radial thickness of the retaining flange (34) is much less than half the thickness of the wall of the pipe (16).

8. A connector according to any of claims 1 to 7, characterised in that the sleeve inner wall is formed with axially consecutive peripheral grooves (20 to 23).

9. A connector according to any of claims 1 to 8, characterised in that the sleeve (10) has socket-like ends which are in laterally inverted relationship to one another as referred to their centre plane which extends through the pipe axis perpendicularly thereto.

Fig. 1

Fig. 2

Fig. 3

14  12  10  16

Fig. 4

32

16          16

34

Fig. 5

32   34

16          16

Fig. 6

12

74   72   70   68

Fig. 7

9